Europäisches Patentamt

European Patent Office

Office européen des brevets

(11) Veröffentlichungsnummer: **0 432 565 A1**

(12) **EUROPÄISCHE PATENTANMELDUNG**

(21) Anmeldenummer: 90122608.4

(22) Anmeldetag: 27.11.90

(51) Int. Cl.5 **B65G 61/00, B65G 47 90**

(30) Priorität: 11.12.89 DE 3940865

(43) Veröffentlichungstag der Anmeldung:
19.06.91 Patentblatt 91/25

(84) Benannte Vertragsstaaten:
CH DE FR GB IT LI

(71) Anmelder: STEINLE MASCHINENFABRIK GMBH
Ulmer Strasse 246
W-8900 Augsburg(DE)

(72) Erfinder: Kiederle, Richard, Dipl.-Ing. (FH)
Bauernstrasse 40
W-8901 Stadtbergen(DE)
Erfinder: Schmid, Eugen
Mühlbachstrasse 35
W-8902 Neusäss(DE)
Erfinder: Federspiel, Leo
Raiffelsenstrasse 33
W-8901 Diedorf(DE)

(74) Vertreter: Munk, Ludwig, Dipl.-Ing.
Patentanwalt Prinzregentenstrasse 1
W-8900 Augsburg(DE)

(54) **Vorrichtung zum Stapeln bzw. Entstapeln.**

(57) Bei einer Vorrichtung zum Stapeln bzw. Entstapeln von vorzugsweise mit Grifflöchern (17) versehenen Flaschenkästen (14) oder dergleichen, mit einem mit zum Aufnehmen bzw. Absetzen der Gebinde in und außer Eingriff mit den Gebinden, vorzugsweise mit den Grifflöchern (17) der Gebinde, bringbaren Greifern (18) versehenen Greiferkopf (21), der an einem den Umschlagplatz übergreifend angeordneten, zwischen dessen Aufnahme- und Absetzbereich verfahrbaren Greiferwagen (2) aufgenommen ist, sind die Greifer (18) zum Aufnehmen bzw. Absetzen der Gebinde unter gleichzeitiger Durchführung einer Schwenkbewegung gegenüber dem bezüglich des ihn aufnehmenden Greiferwagens (2) stationären Greiferkopf (21) heb- und senkbar angeordnet und antreibbar. Hierdurch ergibt sich eine fliegende Betriebsweise der Greifer und dementsprechend eine hohe Durchsatzleistung der gesamten Vorrichtung.

FIG 4

## VORRICHTUNG ZUM STAPELN BZW. ENTSTAPELN

Die Erfindung betrifft eine Vorrichtung zum Stapeln bzw. Entstapeln von vorzugsweise mit Grifflöchern versehenen Gebinden, insbesondere zum Be- bzw. Entladen von Paletten mit derartigen Gebinden, wie Flaschenkästen etc., mit einem mit zum Aufnehmen bzw. Absetzen der Gebinde in und außer Eingriff mit den Gebinden, vorzugsweise mit den Grifflöchern der Gebinde, bringbaren Greifern versehenen Greiferkopf, der an einem den Umschlagplatz übergreifend angeordneten, zwischen dessen Aufnahme- und Absetzbereich verfahrbaren Greiferwagen aufgenommen ist.

Um die in der Regel hakenförmigen Greifer in und außer Eingriff mit den Gebinden zu bringen, müssen die Greifer geschwenkt werden. Um die Gebinde anzuheben bzw. abzusetzen, müssen die hiermit in Eingriff gebrachten Greifer eine Hubbewegung durchführen. Diese wird bei den bekannten Anordnungen durch den Greiferkopf ausgeführt, der hierzu gegenüber dem Greiferwagen eine Hubbewegung ausführt. Die auf dem Greiferkopf aufgenommenen Greifer sind dementsprechend nur für reine Schwenkbewegung gegenüber dem Greiferkopf eingerichtet. Infolge der getrennten Durchführung der Hubbewegung und der Schwenkbewegung ergeben sich erfahrungsgemäß nicht nur ein aufwendiger Aufbau sowie ein unruhiger Lauf, sondern vor allem hohe Verlustzeiten, die zu einer niedrigen Durchsatzleistung führen.

Hiervon ausgehend ist es daher die Aufgabe der vorliegenden Erfindung, eine Vorrichtung eingangs erwähnter Art mit einfachen und kostengünstigen Mitteln so zu verbessern, daß eine vergleichsweise hohe Durchsatzleistung erreicht werden kann.

Diese Aufgabe wird erfindungsgemäß dadurch gelöst, daß die Greifer zum Aufnehmen bzw. Absetzen der Gebinde unter gleichzeitiger Durchführung einer Schwenkbewegung gegenüber dem bezüglich des in aufnehmenden Greiferwagens stationär angeordneten Greiferkopf heb- und senkbar angeordnet und antreibbar sind.

Durch die erfindungsgemäße Kombination der Hub- und Schwenk-bewegung arbeiten die Greifer hier praktisch als fliegende Greifer, die das jeweilige Gebinde im Lauf aufnehmen bzw. absetzen. Hierdurch ergeben sich in vorteilhafter Weise eine Reduzierung der Schaltzeiten und eine damit einhergehende Harmonisierung der Bewegungsabläufe, was insgesamt zu der erwünschten Senkung von Verlustzeiten und Erhöhung der Durchsatzleistung führt. Gleichzeitig ergibt sich ein vergleichsweise einfacher Aufbau, da die gewünschte Greiferbewegung mit Hub- und Schwenkkomponente durch ein und dieselbe Antriebseinrichtung bewerkstelligt werden kann, so daß die bisher benötigte zweite Antriebseinrichtung in Wegfall kommen kann. Damit verbunden ist auch ein vergleichsweise ruhiger Lauf.

Die obigen Vorteile lassen sich in besonders hohem Maße erreichen, wenn die Greifer eine einer kurvenförmigen Hubbewegung überlagerte, hin- und hergehende Pendelbewegung ausführen, wobei die Eingriffklauen der Greifer eine nach oben offene Bewegungskurve überstreichen, die eine vertikale Flanke und eine dergegenüber geneigte und/oder gekrümmte Flanke aufweist.

Eine weitere besonders zu bevorzugende Maßnahme kann darin bestehen, daß die Hubgeschwindigkeit der Greifer-Eingriffklauen zum bogenförmigen Umkehrbereich zwischen den beiden Flanken hin abfällt. Hierbei erfolgt die Ein- bzw. Ausgriffbewegung vergleichsweise langsam, was eine hohe Betriebssicherheit gewährleistet. Dennoch wird ein völliger Stillstand der Greifer vermieden.

Gemäß einer vorteilhaften Ausgestaltung der übergeordneten Maßnahmen kann zur Aufnahme einer Greiferreihe der reihenförmig angeordneten Greifer jeweils ein Schwingbügel vorgesehen sein, der im Bereich wenigstens einer Seite, vorzugsweise im Bereich beider Seiten, durch zwei Schwinghebel, von denen einer antreibbar ist, mit dem Rahmen des Greiferkopfes verbunden ist. Diese Maßnahmen ergeben eine Viergelenkanordnung, bei der durch einfache Wahl der Lage und Länge der Schwinghebel die gewünschte Kurvenform erzielbar ist. Außerdem ergeben sich ein vergleichsweise einfacher und verschleißarmer Aufbau sowie eine besonders übersichtliche Kinematik.

Zweckmäßig kann hierbei die antreibbare Schwinge mit einem Ritzel verbunden sein, das im Eingriff mit einem hin- und herbewegbaren, vorzugsweise als Zahnstange ausgebildeten Antriebselement ist. Hierdurch ergibt sich eine hohe Bewegungsgenauigkeit.

Eine weitere vorteilhafte Maßnahme kann darin bestehen, daß der Greiferwagen in der Höhe stationär angeordnet ist und daß der Umschlagplatz einerseits eine in der Höhe stationäre Schichtstation und andererseits einen auf deren Niveau anhebbaren und demgegenüber absenkbaren Hubtisch aufweist. Hierbei kommt die Funktion der fliegend arbeitenden Greifer besonders vorteilhaft zum Tragen, da die Zu- bzw. Abnahme der Stapelhöhe auf dem Hubtisch durch diesen ausgeglichen wird und der Greiferwagen daher in der Höhe stationär sein kann. Dies macht Bewegungsüberschneidungen möglich und bringt eine Nachpositionierung des Greiferwagens in Wegfall, was sich alles vorteilhaft auf die erzielbare Durchsatzleistung auswirkt.

Weitere vorteilhafte Ausgestaltungen und zweckmäßige Fortbildungen der übergeordneten Maßnahmen ergeben sich aus der nachstehenden Beschreibung eines Ausführungsbeispiels anhand der Zeichnung in Verbindung mit den restlichen Unteransprüchen.

In der Zeichnung zeigen:

Figur 1    eine Seitenansicht einer erfindungsgemäßen Palettiervorrichtung zum Handhaben von Flaschenkästen in schematischer Darstellung,

Figur 2    eine Seitenansicht eines Ausführungsbeispiels für den Greiferantrieb und die Greifersteuerung,

Figur 3    eine Draufsicht auf die Anordnung gemäß Figur 2 und

Figur 4    ein schematisches Bewegungsdiagramm der Greifer.

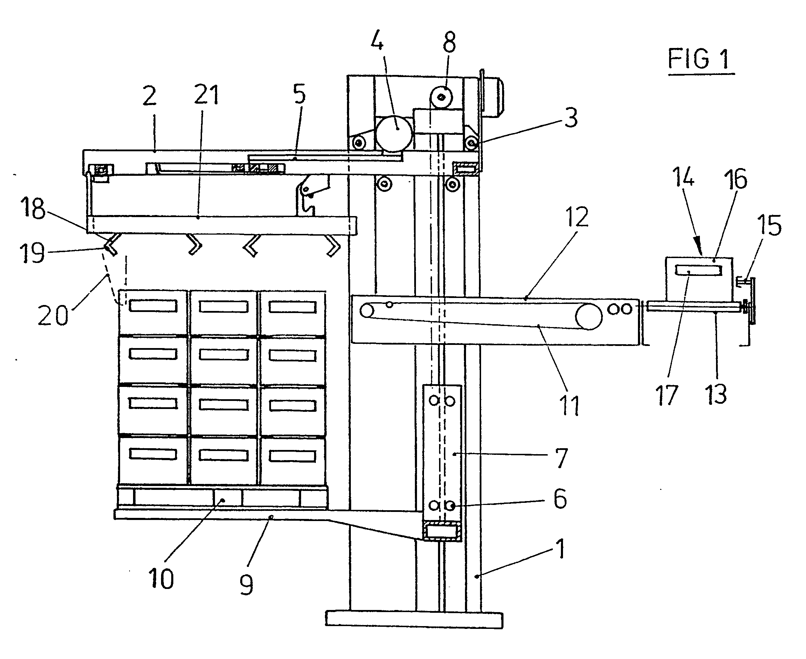

Die der Figur 1 zugrundeliegende Palettiervorrichtung besteht aus einem portalförmigen Ständer 1 , an dessen horizontalem Quersteg ein quer hierzu verschiebbarer Greiferwagen 2 gelagert ist, wie durch Laufrollen 3 angedeutet ist. Der Greiferwagen 2 ist durch eine hier als Kulissenantrieb ausgebildete, mit einem Antriebsmotor 4 versehene Verschiebeeinrichtung 5 hin- und her verschiebbar.

Auf den senkrechten Säulen des Ständers 1 ist ein mit Laufrollen 6 versehener Hubwagen 7 gelagert, der an einem auf dem Steg des Ständers aufgenommenen Hubwerk 8 aufgehängt ist und hierdurch entgegen der Schwerkraft angehoben werden kann. Der Hubwagen 7 ist mit einer quer zum Ständersteg auskragenden Ladeplattform 9 versehen, die als Hubtisch für eine Palette 10 dient.

Oberhalb des Hubbereichs der Ladepattform 9 ist eine von der dieser gegenüberliegenden Seite in den portalförmigen Ständer 1 hineinragende, hier mit einem Förderband 11 versehene Schichtstation 12 vorgesehen, die an eine quer hierzu verlaufende Rollenbahn 13 anstößt. Beim Beladen der Palette 10 werden die auf der Rollenbahn 13 ankommenden Kästen 14 durch einen Schieber 15 reihenweise auf die Schichtstation 12 geschoben, auf der mehrere Reihen zu einer Lage gesammelt werden, die anschließend mittels des die Schichtstation 12 und die Ladeplattform 9 übergreifenden, zwischen Schichtstation 12 und LadePlattform 9 hin- und herbewegbaren Greiferwagens 2 auf die Palette 10 aufgesetzt wird. Anschließend wird die Ladeplattform 9 um die Kastenhöhe abgesenkt, so daß die nächste Lage aufgesetzt werden kann. Beim Entpalettieren laufen diese Vorgänge in umgekehrter Richtung ab, das heißt die auf der Palette 10 gestapelten Kastenlagen werden nacheinander auf die Schichtstation 12 übersetzt und dann reihenweise auf der Rollenbahn 13 abtransportiert.

Im dargestellten Beispiel kann die Palette 10 mit Hilfe des Hubwagens 7 und der hierauf aufgenommenen Ladeplattform 9 angehoben und abgesenkt werden. Der zum Umsetzen der Kastenlagen dienende Greiferwagen 2 kann dabei in der Höhe stationär angeordnet sein. Die Schichtstation 12 und der dieser zugeordnete Einlauf befinden sich dabei im Bereich des oberen Endes des Hubbereichs der Ladeplattform 9. Es wäre aber auch denkbar, die Ladeplattform 9 im Bereich des unteren Endes ihres im dargestellten Ausführungsbeispiel vorhandenen Hubbereichs stationär anzuordnen und dafür den Greiferwagen 2 in der Höhe verstellbar zu machen. Hierzu müßte der Greiferwagen 2 auf einem an den Säulen des portalförmigen Ständers 1 auf- und abfahrbaren Hubwagen aufgenommen sein. Die Schichtstation 12 mit zugeordnetem Einlauf müßte sich bei einer derartigen Ausführung etwa auf dem Niveau der stationären Aufnahmeplattform befinden.

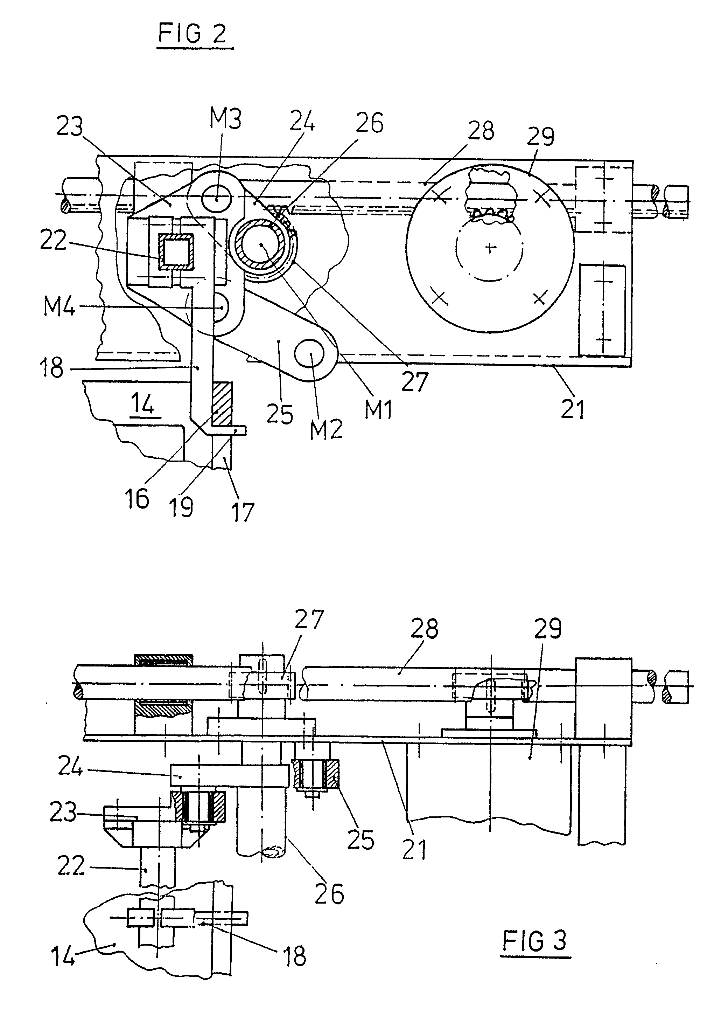

Die Kästen 14 sind im Bereich ihrer vier Seitenwände mit durch jeweils einen Steg 16 übergriffenen Grifflöchern 17 versehen. Zum Tragen der lagenweise zusammengestellten Kästen 14 sind hakenförmige Greifer 18 mit vorderen Eingriffklauen 19 vorgesehen, die in und außer Eingriff mit einem jeweils zugeordneten Griffloch 17 bringbar sind. Der Figur 1 liegt eine Betriebsphase zugrunde, in der sich die Greifer 18 in ihrer Außereingriffstellung befinden. Der Figur 2 liegt die Eingriffsstellung zugrunde, in der die Eingriffsklaue 19 jedes Greifers 18 in ein zugeordnetes Griffloch 17 eines Kastens 14 eingreift. Die Greifer 18 vollführen zum Aufnehmen und Anheben bzw. Absenken und Absetzen jeweils einer Kastenlage eine durch eine gestrichelte, nach oben offene Kurve 20 angedeutete kurvenförmige Hubbewegung mit gleichzeitiger Schwenkbewegung.

Die Greifer 18 sind auf einem am Greiferwagen 2 auswechselbar befestigten Greiferkopf 21 aufgenommen. Hierdurch ist es möglich, zur Handhabung unterschiedlicher Kästen 14 einfach verschiedene, mit entsprechend angeordneten Greifern 18 bestückte Greiferköpfe 21 einzusetzen. Gegenüber diesem bezüglich des Greiferwagens 2 stationären Greiferkopf 21 sind die Greifer 18 schwenkbar und entsprechend der Kurve 20 heb- und senkbar angeordnet und mit einem entsprechenden Antrieb versehen.

Zur Aufnahme der Greifer 18 ist der Greiferkopf 21, wie am besten aus den Figuren 2 und 3 erkennbar ist, mit traversenartig über seine Breite reichenden, im Querschnitt rechteckförmigen Stangen 22 versehen, auf die eine entsprechende Anzahl von Greifern 18 aufgeklemmt ist. Die Stangen 22 sind mit ihren Enden an seitlichen Lagerplatten 23 aufgenommen, an denen jeweils zwei übereinander angeordnete Schwinghebel 24, 25 angelenkt sind, die andererseits am Gestell des Greiferkopfes 21 angelenkt sind. Die gestellseitigen, fixen Anlenkpunkte der Schwinghebel 24, 25 sind mit M1 bzw. M2 bezeichnet. Die lagerplattenseitigen Anlenkpunkte sind mit M3 bzw. M4 bezeichnet.

Jede Stange 22 und die zugeordneten Lagerplatten 23 bilden praktisch einen Bügel mit abgewinkelten Enden, der mittels einer durch die Schwinghebel 24, 25 bzw. deren Lagerstellen M1 bis M4 gebildeten Viergelenkanordnung am Greiferkopf 21 aufgenommen ist. Es ergibt sich dementsprechend eine Schwinge, deren Kinematik durch die Länge der Schwinghebel 24, 25 und die Position der Lagerpunkte M1 bis M4 in der gewünschten Weise so ausgelegt werden kann, daß die Greifer 18 unter gleichzeitiger Schwenkbewegung eine Hubbewegung entlang der Kurve 20 ausführen, wodurch die Kästen 14 im Lauf aufgenommen, angehoben und wieder abgesetzt werden können.

Einer der Schwinghebel , hier der obere Schwinghebel 24, ist mit einer Antriebseinrichtung verbunden, mittels der er reversierend um etwa 180° vor und zurück schwenkbar ist. Hierzu ist im dargestellten Ausführungsbeispiel eine bei M1 im Gestell des Greiferkopfes 21 gelagerte, wenigstens einen oberen Schwinghebel 24 aufnehmende Welle 26 vorgesehen, die ein Ritzel 27 trägt, das im Eingriff mit einer reversierend hin- und herbewegbaren Zahnstange 28 ist. Im dargestellten Ausführungsbeispiel sind auf der Welle 26, die hier über die Breite des Greiferkopfes 21 durchgeht, beide einander gegenüberliegenden, oberen Schwinghebel 24 aufgenommen, was eine exakte Synchronbewegung gewährleistet. Die oberen, angetriebenen Schwinghebel 24 fungieren hier als Antriebslenker. Die unteren, nicht angetriebenen Schwinghebel 25 fungieren als Steuerlenker.

Die Zahnstange 28 ist mittels einer zugeordneten Antriebseinrichtung 29 reversierend antreibbar. Hierzu wird der Motor der Antriebseinrichtung 29 einfach umgesteuert. Die Zahnstange 28 kann über die ganze Länge des Greiferkopfes 21 durchgehen, so daß sämtliche, jeweils einer Greiferreihe zugeordneten Schwingen hierdruch bewegbar sind. Zur Erzielung gegenläufiger Bewegungen kann dabei einfach ein Zwischenrad Verwendung finden. Anstelle eines Zahnstangenantriebs wäresaber auch ohne weiteres möglich, die Schwingen mittels eines Hubkolbenantriebs etc. zu bewegen.

Der gewünschte Verlauf der Greiferbewegung wird, wie schon erwähnt, durch die Länge der Schwinghebel 24, 25 und die Position der Lagerstellen M1 bis M4 erreicht. Im dargestellten Ausführungsbeispiel ist der als Steuerlenker fungierende, untere Schwinghebel 25 länger als der obere, als Antriebslenker fungierende Schwinghebel 24.

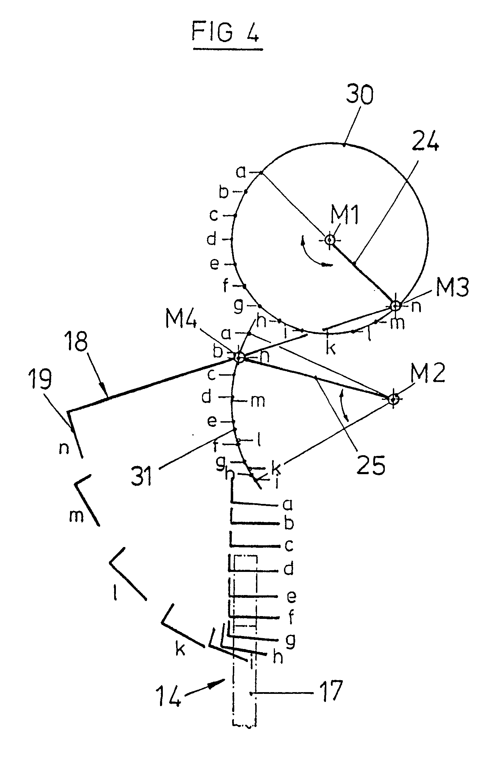

Die gestellseitige Anlenkung M2 des Steuerlenkers ist gegenüber der gestellseitigen Anlenkung M1 des Antriebslenkers um etwa die halbe Steuerlenkerlänge vom Greifer 18 weglaufend versetzt. Die schwingenseitigen An-lenkpunkte M3, M4 sind so angeordnet, daß sie sich in der der Figur 2 zugrundeliegenden Eingriffsstellung etwa fluchtend übereinander befinden. Hiermit wird die der Figur 4 zugrundeliegende Bewegungsweise der Greifer 18 bewerkstelligt.

Die Anlenkung M3 der angetriebenen Schwinghebel 24, deren Schwenkhub hier 180° betragen soll, bewegt sich bei der Durchführung eines Schwenkhubs, wie in Figur 4 hervorgehoben ist, auf einer Kreisbahn 30 um die gestellseitige Anlenkung M1 . Mehrere, um jeweils 15° voneinander distanzierte Positionen auf der Kreisbahn 30 sind durch die Punkte a bis n angedeutet. Im Verlauf eines Hubs der Schwinghebel 24 vollführen die längeren Schwinghebel 25 einen Doppelhub in Form einer auf- und abgehenden Pendelbewegung, wobei sich die schwingenseitige Anlenkung M4 auf einer Kreisbahn 31 um die gestellseitige Anlenkung M2 bewegt. Die den Positionen a bis n entsprechenden Positionen sind ebenfalls durch Punkte a bis n auf der Kreisbahn 31 angedeutet. Die Bewegungsumkehr erfolgt im dargestellten Ausführungsbeispiel offenbar im Bereich der Postitionen h bis k. Die Klauen 19 der Greifer 18 werden dementsprechend bei jedem einfachen Hub, das heißt bei jedem Hinhub und bei jedem Herhub der angetriebenen Schwinghebel 24 auf der in Figur 1 bereits angedeuteten, nach oben offenen, zwei durch einen Umkehrbogen miteinander verbundene Flanken aufweisenden Kurve 20 auf- und abbewegt. Gleichzeitig vollführen die Klauen 19 der Greifer 18 eine Schwenkbewegung von einer etwa waagrechten Stellung im Bereich der einen Flanke der Kurve 20 zu einer hiergegen immer stärker geneigten Stellung im Bereich der anderen Flanke der Kurve 20. In Figur 4 sind die rechte Flanke der Kurve 20 der etwa waagrechten Stellung und die linke Flanke der geneigten Stellung der Eingriffsklauen 19 der Greifer 18 zugeordnet. Die den Positionen a bis n entsprechenden Positionen der Eingriffsklauen 19 sind ebenfalls mit a bis n bezeichnet.

Ausgangspunkt der Bewegung der Greifer 18 zum Aufnehmen einer Kastenlage ist, wie Figur 4 weiter erkennen läßt, die Position n. In dieser Position befinden sich die Greifer 18 am oberen Ende der gekrümmten Flanke der Bewegungskurve 20, wobei die Eingriffsklauen 19 schräg nach unten geneigt sind. Anschließend gehen die Greifer 18 entlang der gekrümmten Flanke der Bewegungskurve 20 nach unten und vollführen dabei gleichzeitig eine Schwenkbewegung, so daß die Neigung der Eingriffsklauen 19 immer geringer wird. Im unteren, bogenförmigen Umkehr-bereich der Bewegungskurve 20 tauchen dann die Eingriffsklauen 19, wie in Figur 4 bei den Positionen i bis g angedeutet ist, in schon sehr flacher Stellung in das Griffloch sind eines Kastens 14 ein. Anschließend gehen die Greifer 18 entlang der vertikalen Flanke der Bewegungskurve 20 nach oben, wobei ihre Eingriffklauen 19 etwa horizontal ausgerichtet sind, wie die Positionen g bis a erkennen lassen. Die nach oben gehenden Greifer 18 nehmen den gegriffenen Kasten mit, der dabei auf den etwa horizontal ausgerichteten Eingriffsklauen 19 eine zuverlässige Auflage hat. Ausgangspunkt zum Absetzen eines Kastens bzw. einer Kastenlage ist dementsprechend die Position a. Hiervon ausgehend gehen die Greifer zunächst entlang der vertikalen Flanke der Bewegungskurve 20 mit etwa horizontal ausgerichteten Klauen 19 nach unten. Wenn der Kasten abgesetzt ist, tauchen die Klauen 19 unter Zunahme ihrer Neigung aus dem Griffloch 17 aus und gehen anschließend unter weiterer Neigungszunahme nach oben, wodurch eine zuverlässige Freigabe des Kastens erfolgt. Das Aufnahmen und Anheben bzw. Absenken und Absetzen der Kästen erfolgt dementsprechend in jedem Falle während der Bewegung der Greifer 18 entlang der Bewegungskurve 20, ohne daß eine Unterbrechung stattfindet und damit praktisch fliegend.

Im dargestellten Ausführungsbeispiel wird die gewünschte, nach oben offene, zwei durch einen Umkehrbogen miteinander verbundene Flanken, von denen eine vertikal und eine demgegenüber gekrümmt verläuft, aufweisende Bewegungskurve 20 der Greifer 18 durch die den Figuren 2 und 3 zugrundeliegende Viergelenkanordnung erreicht. Denkbar wäre es aber auch, eine derartige Bewegungskurve auf anderem Wege, etwa mit Hilfe einer Kulissenführung, zu erreichen.

**Ansprüche**

1. Vorrichtung zum Stapeln bzw. Entstapeln von vorzugsweise mit Grifflöchern (17) versehenen Gebinden, insbesondere zum Be- bzw. Entladen von Paletten (10) mit derartigen Gebinden, wie Flaschenkästen (14) etc., mit einem mit zum Aufnehmen bzw. Absetzen der Gebinde in und außer Eingriff mit den Gebinden, vorzugsweise mit den Grifflöchern (17) der Gebinde bringbaren Greifern (18) versehenen Greiferkopf (21), der an einem den Umschlagplatz übergreifend angeordneten, zwischen dessen Aufnahme- und Absetzbereich verfahrbaren Greiferwagen (2) aufgenommen ist, **dadurch gekennzeichnet, daß** die Greifer (18) zum Aufnehmen bzw. Absetzen der Gebinde unter gleichzeitiger Durchführung einer Schwenkbewegung gegenüber dem bezüglich des ihn aufnehmenden Greiferwagens (2) stationären Greiferkopf (21) heb- und senkbar angeordnet und antreibbar sind.

2. Vorrichtung nach Anspruch 1, **dadurch gekennzeichnet, daß** die Greifer (18) eine einer kurvenförmigen Hubbewegung überlagerte, hin- und hergehende Pendelbewegung ausführen, wobei die Eingriffsklauen (19) der Greifer (18) eine nach oben offene Bewegungskurve (20) überstreichen, die wenigstens eine etwa vertikale Flanke und vorzugsweise eine etwa vertikale Flanke und eine dieser gegenüber geneigte und oder gekrümmte Flanke aufweist.

3. Vorrichtung nach einem der vorhergehenden Ansprüche, **dadurch gekennzeichnet, daß** die Hubgeschwindigkeit der Eingriffsklauen (19) der Greifer (18) zum bogenförmigen Umkehrbereich zwischen den beiden Flanken der Bewegungskurve (20) hin abfällt.

4. Vorrichtung nach einem der vorhergehenden Ansprüche, **dadurch gekennzeichnet, daß** zur Aufnahme einer Greiferreihe der reihenförmig angeordneten Greifer (18) jeweils eine Schwinge (22, 23) vorgesehen ist, die im Bereich wenigstens einer Seite des Greiferkopfes (21), vorzugsweise im Bereich beider Seiten, durch zwei Schwinghebel (24, 25), von denen einer vorzugsweise reversierend antreibbar ist, mit dem Rahmen des Greiferkopfes (21) verbunden ist.

5. Vorrichtung nach Anspruch 4, **dadurch gekennzeichnet, daß** die Schwinge zwei seitliche, an die zugeordneten Schwinghebel (24, 25) angelenkte Lagerplatten (23) aufweist, die durch eine vorzugsweise rechteckförmigen Querschnitt aufweisende Stange (22) miteinander verbunden sind, auf welche die zugeordneten Greifer (18) aufgeklemmt sind.

6. Vorrichtung nach einem der vorhergehenden Ansprüche 4 oder 5, **dadurch gekennzeichnet, daß** der antreibbare Schwinghebel (24) mit einem Ritzel (27) verbunden ist, das im Eingriff mit einem reversierend antreibbaren, vorzugsweise als Zahnstange (28) ausgebildeten Antriebselement ist.

7. Vorrichtung nach Anspruch 6, **dadurch gekennzeichnet, daß** die Antriebseinrichtung eine über die Breite des Greiferkopfes (21) durchgehende, antreibbare Welle (26) aufweist, durch die zwei einander gegenüberliegende Schwinghebel (24) miteinander verbunden sind und daß vorzugsweise die Antriebswellen (26) gegenläufig bewegbarer Greifer (18) direkt bzw. unter Zwischenschaltung eines Zwischenrads im Eingriff mit dem über die ganze Länge des Greiferkopfes (21) durchgehenden, vorzugsweise als Zahnstange (28) ausgebildeten Antriebselement sind.

8. Vorrichtung nach einem der vorhergehenden Ansprüche 4 bis 7, **dadurch gekennzeichnet,** daß der eingriffsklauennähere Schwinghebel (25) länger als der vorzugsweise antreibbare, eingriffsklauenfernere Schwinghebel (24) ist.

9. Vorrichtung nach Anspruch 8, **dadurch gekennzeichnet,** daß der längere Schwinghebel (25) über den rahmenseitigen Anlenkpunkt (M1) des kürzeren Schwinghebels (24) in von den Greifern (18) weglaufender Richtung hinausläuft.

10. Vorrichtung nach einem der vorhergehenden Ansprüche, **dadurch gekennzeichnet,** daß der Greiferwagen (2) in der Höhe stationär angeordnet ist und daß der Um-

FIG 1

## FIG 2

## FIG 3

FIG 4

**Europäisches Patentamt**

**EUROPÄISCHER RECHERCHENBERICHT**

Nummer der Anmeldung

**EP 90 12 2608**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 005 529 (SCHAEFER)<br>* Insgesamt *<br><br>– – – | 1-5 | B 65 G<br>61 00<br>B 65 G 47 90 |
| Y | EP-A-0 226 076 (WURTH)<br>* Spalte 4, Zeilen 15-32; Figuren *<br><br>– – – – – | 1-5 | |

| | | | RECHERCHIERTE SACHGEBIETE (Int. Cl.5) |
|---|---|---|---|
| | | | B 65 G<br>B 66 C<br>B 65 B |

Der vorliegende Recherchenbericht wurde für alle Patentansprüche erstellt

| Recherchenort | Abschlußdatum der Recherche | Prüfer |
|---|---|---|
| Den Haag | 25 März 91 | OSTYN T.J.M. |